# EUROPÄISCHE PATENTSCHRIFT

(11) **EP 2 769 172 B1**
(45) Veröffentlichungstag und Bekanntmachung des Hinweises auf die Patenterteilung: **05.09.2018**
(21) Anmeldenummer: 12778613.5
(22) Anmeldetag: 02.10.2012
(51) Int. Cl.: G01B 5/24, G01B 5/008, G01B 5/004, G01B 5/20

(54) **VERFAHREN ZUR VERMESSUNG EINES DREIDIMENSIONALEN OBJEKTS**
METHOD FOR MEASURING A THREE-DIMENSIONAL OBJECT
PROCÉDÉ DE MESURAGE D'UN OBJET EN TROIS DIMENSIONS

(30) Priorität: 19.10.2011 DE 102011116339
(43) Veröffentlichungstag der Anmeldung: 27.08.2014
(73) Patentinhaber: Spieth-Maschinenelemente Gmbh & Co Kg, 73730 Esslingen (DE)
(72) Erfinder: ALXNEIT, Heiko, 70734 Fellbach (DE)
(74) Vertreter: Bartels und Partner, Patentanwälte
(86) Internationale Anmeldenummer: PCT/EP2012/004130
(87) Internationale Veröffentlichungsnummer: WO 2013/056788

(56) Entgegenhaltungen:
- JP-A- 2005 172 810
- US-A1- 2003 217 592
- US-A1- 2010 217 561

## Beschreibung

Die Erfindung betrifft ein Verfahren zur Vermessung eines dreidimensionalen Objekts mit den Merkmalen im Oberbegriff von Anspruch 1.

EP 1 103 781 B1 offenbart ein Verfahren zum Messen einer V-Nutenform eines zu messenden Objekts durch Fixieren des Objekts auf einem Drehtisch und Verwenden einer Abtastsonde zum Messen der Position, während das Objekt auf dem Drehtisch gedreht wird. Mit dem bekannten Verfahren kann eine Außenfläche, insbesondere ein Außengewinde, am Objekt vermessen werden, wobei eine Steuerung zum Abtasten eines Zweiflanken-Kontaktes derart eingesetzt wird, dass das Messelement mit zwei Flanken in Kontakt kommt, um die V-Nut abzubilden.

Die US 2010/0217561 A1 beschreibt eine Messeinrichtung zum Vermessen eines Profils und/oder einer Form eines Werkstücks. Die Messeinrichtung weist eine Basis aus Granit für einen säulenartigen Träger auf, wobei an dem, der Basis abgewandten Ende des Trägers ein um drei Achsen bewegbarer Messgriffel angeordnet ist. Hierzu sind drei Servoantriebe vorgesehen. Ein Werkstückhalter ist rotierbar ausgebildet und eine Drehachse des Werkstückhalters ist schwenkbar relativ zu der z-Achse, in welcher der Messgriffel entlang des Trägers bewegbar angeordnet ist.

Die US 2003/0217592 A1 beschreibt eine Vorrichtung zum Messen eines Oberflächenprofils eines zu vermessenden Objektes, wobei eine Messsonde zur berührenden Messung des Objekts vorgesehen ist. Führungsmittel für die Messsonde sind so gebildet, dass eine Längsachse der Messsonde mit einem Kippwinkel relativ zu deren Bewegungsrichtung von oder zu dem Objekt versehen werden kann, wodurch die Messsonde mit einer vorgebbaren Auflagekraft an dem Objekt entlang bewegt werden kann.

Bei der Fertigung von Maschinenelementen, die typischerweise als Drehteile hergestellt werden und jeweils ein Gewinde aufweisen können, ist es entsprechend der gewählten Toleranzklasse bzw. Fertigungstoleranz erforderlich, geometrische Kenngrößen, insbesondere Gewindekenngrößen, eines gefertigten Maschinenelements zu messen. Wünschenswert ist ebenfalls eine Messung der Ebenheit von Planflächen, da der Planlauf mit herkömmlichen, in der Vielteilefertigung eingesetzten Prüfmethoden nicht messbar ist. Eine in einfacher Weise durchzuführende Messung des Planlaufs ermöglicht eine auch bei der Fertigung einer Vielzahl von Maschinenelementen durchzuführenden Bestimmung der jeweiligen Fertigungstoleranz und folglich die Sicherung einer hohen Fertigungsqualität. Mitunter stellt die Messung des Planlaufs einen Wettbewerbsvorteil dar.

Die Erfindung stellt sich die Aufgabe, ein mit einfachen Mitteln durchzuführendes, bei der Fertigung einer Vielzahl von Objekten, wie Maschinenelementen, einsetzbares Verfahren zur Verfügung zu stellen, welches die Ermittlung von geometrischen Kenngrößen, insbesondere eines Planverlaufs, am jeweiligen Objekt ermöglicht.

Diese Aufgabe wird gelöst durch ein Verfahren mit den Merkmalen von Patentanspruch 1 in seiner Gesamtheit.

Das erfindungsgemäße Verfahren zeichnet sich dadurch aus, dass mittels des Tasters eine quer zur Drehachse des Halters angeordnete Planfläche des Objekts abgetastet wird und dass dann aus einer Verrechnung der Geometrie des Objekts zunächst die Lage einer Bezugsachse des Objekts bestimmt und anschließend eine Planflächenkontur zum Planlauf des Objekts bezogen auf die Bezugsachse des Objekts berechnet wird. Hieraus ist die Information erhältlich, ob die Planfläche eben ausgebildet und senkrecht zur Rotationsachse bzw. der Bezugsachse verlaufend angeordnet ist.

Der Halter und der Taster werden linear entlang einer Translationsachse zueinander bewegt, die mit der Drehachse des Halters einen spitzen Winkel einschließt und eine Ebene aufspannt, innerhalb der der Taster bewegbar ist.

Durch die Anordnung der Drehachse und der Transla-tions- bzw. Bewegungsachse in einer Ebene erfolgt eine Projektion in diese Ebene, anders ausgedrückt werden die zu vermessenden Koordinaten um eine Dimension, von 3 auf 2, reduziert. Somit ist der Einsatz eines kostenintensiven, mitunter einen langen Messzyklus erfordernden Werkzeugs zur dreidimensionalen Erfassung entbehrlich. Die Reduzierung auf zwei zu erfassende Dimensionen ermöglicht den Einsatz von einfachen preiswerten Werkzeugen zur Erfassung der Position des Tasters in der zweidimensionalen, von Drehachse und Translationsachse aufgespannten Ebene sowie verkürzte Messzyklen. Zweckmäßigerweise erfolgt die Erfassung der Position des Tasters in einem Koordinatensystem und verläuft die Translationsachse parallel zu einer Koordinatenachse des Koordinatensystems, typischerweise eines kartesischen Koordinatensystems mit X-Achse, Y-Achse und Z-Achse. Es findet eine Projektion beispielsweise gemäß Z = 0 in die von X-Achse und Y-Achse aufgespannten Ebene statt. Der Winkel ϕ zwischen der Drehachse des Halters und der X-Achse und der radiale Abstand r eines Punkts auf der Drehachse zum Nullpunkt des Koordinatensystems stellt die jeweilige Position in Zylinderkoordinaten dar. Auf der Basis des Winkels ϕ und der Rotationsgeschwindigkeit ω des Objekts um die Drehachse sowie der Geschwindigkeit der Relativbewegung von Halter und Taster kann die vollständige dreidimensionale Ausgestaltung des zu vermessenden Objekts bestimmt bzw. errechnet werden.

Als besonders vorteilhaft hat es sich erwiesen, dass der Winkel zwischen der Translationsachse und der Drehachse 15° beträgt. Beispielsweise kann das zu vermessende Objekt, wie eine Stellmutter oder ein Gewindering, auf einem um 15° geneigten Plantisch montiert werden.

Bei einer gleichzeitigen Rotation der Stellmutter und Verfahrbewegung des Tasters werden mittels des Tasters als Teil einer Konturmessvorrichtung das Gewinde der Stellmutter und ihre Planfläche abgetastet. Planfläche meint die kreiszylinderförmige Stirnfläche, welche quer, idealerweise senkrecht, zur Rotationsachse der Stellmutter angeordnet ist bzw. angeordnet sein soll. Aus der Verrechnung der Geometrie des Gewindes wird zunächst die Lage einer Bezugsachse, welche idealerweise mit der Drehachse zusammenfällt, bestimmt; anschließend wird die Planflächenkontur zum Planlauf bezogen auf die Bezugsachse berechnet.

In einer weiteren Variante wird mittels des Tasters eine insbesondere parallel zur Drehachse verlaufende Innenfläche oder eine Außenfläche des Objekts abgetastet. Hierbei kann ein an der Innenfläche oder der Außenfläche vorgesehenes Gewinde abgetastet werden. Das erfindungsgemäße Verfahren ermöglicht neben einer Bestimmung der Form des jeweiligen Gewindes bzw. der Ausgestaltung der jeweiligen Fläche eine Aussage über deren Rotationssymmetrie in Bezug zur Drehachse bzw. die Bestimmung einer entsprechenden Bezugs- bzw. Rotationsachse. Demgemäß wird das erfindungsgemäße Verfahren bevorzugt für Objekte eingesetzt, welche eine zur Drehachse rotationssymmetrische Form, insbesondere eine Zylinderform, aufweisen, da hier erfindungsgemäß eine Qualitätskontrolle bei der Fertigung dementsprechender Objekte durchgeführt werden kann.

Das zu vermessende Objekt ist typischerweise ein Maschinenelement, wie eine Stellmutter oder ein Gewindering, und bevorzugt als Drehteil gefertigt. Aus den während einer bestimmten Rotationsbewegung des Halters und einer bestimmten Translationsbewegung zwischen Halter und Taster erfassten Positionen des Tasters können geometrische Kenngrößen des Objekts, wie Profilform, Bezugsachsen, Gesamtplanlauf, Koaxialität und Gesamtrundlauf entsprechender Flächen, bestimmt werden. Von besonderem Interesse für Anwender sind die Profilformtoleranz eines Gewindes, der Winkel der Stirn- bzw. Planfläche zur Bezugs- bzw. Rotationsachse, die Ebenheit der Planfläche, die Rechtwinkligkeit der Planfläche zur Bezugsachse, der Gesamtlaufplan zur Bezugsachse.

Eine Vorrichtung zur Durchführung des Verfahrens zeichnet sich durch einen vergleichsweise geringen konstruktiven Aufwand aus. Der Halter ist typischerweise Teil einer Aufspannvorrichtung, mittels derer eine Neigung entsprechend des gewünschten Winkels eingestellt werden kann sowie eine konstante Drehzahl von 0-60 Umdrehungen pro Minute gewählt werden kann. Die Plan- und Rundlaufgenauigkeit beträgt weniger als 0,1 *µ*m; der Durchmesser typischerweise 150-200 mm. Weiterer Bestandteil ist typischerweise eine Konturmessvorrichtung mit einer konstanten Vorschubgeschwindigkeit ≤0,1 mm pro Sekunde und einem Scheibentaster, welcher bei einer Auflösung von 0,1 *µ*m beispielsweise XY-Koordinaten in einem kartesischen Koordinatensystem ausgibt. Eine Auswerteeinheit als dritter Bestandteil der Vorrichtung kann nach Eingabe von Vorschub, Drehzahl, Punktwolke und Gewindedaten teilweise und insgesamt die Bezugsachsen, Tragflanken, Trag- und Sicherungsflanken sowie Kenngrößen ausgeben.

Zusammenfassend ist festzuhalten, dass erfindungsgemäß eine Methode zum direkten Ermitteln von Bezugsachsen und Fertigungstoleranzen insbesondere von Gewinden und von Planläufen in Bezug auf Gewinde bereitgestellt wird. Mit dem erfindungsgemäßen Verfahren können sowohl zylindrische Geometrien nach DIN EN ISO 12180-2 als auch ebene Geome-trien nach DIN EN ISO 12781-2 erfasst werden. Mit der in die Vorrichtung implementierten Auswertelogik werden auf Basis der erfassten Geometrie Form- und Lageabweichungen sowie ein entsprechender Bezug ermittelt. Das erfindungsgemäße Verfahren kann mit Vorrichtungen bzw. Maschinen durchgeführt werden, die aufgrund ihres einfachen Aufbaus hoch präzise und zugleich preiswert sind. Die Erfassung komplexer Geometrien kann ohne zusätzlichen Umrüstaufwand mit der Messung einfacher Geometrien kombiniert werden, so dass eine hohe Präzision bei vergleichsweise geringem Aufwand erreicht werden kann.

Weitere Vorteile und Merkmale der Erfindung ergeben sich aus der nachfolgenden Beschreibung und den Figuren der Zeichnung. Die vorstehend genannten und die weiter angeführten Merkmale können erfindungsgemäß jeweils einzeln oder in beliebigen Kombinationen verwirklicht sein. Die in den Figuren gezeigten Merkmale sind rein schematisch und nicht maßstäblich zu verstehen. Es zeigen:
- Fig. 1: eine Seitenansicht einer Vorrichtung zur Durchführung des erfindungsgemäßen Verfahrens;
- Fig. 2: die Veranschaulichung der erfindungsgemäßen Anordnung in einem Koordinatensystem;
- Fig. 3a: ein zu vermessendes dreidimensionales Objekt;
- Fig. 3b: ein Schnitt durch das Objekt aus Fig. 3a mit einem daran anliegenden Taster zur erfindungsgemäßen Vermessung;
- Fig. 4: eine mittels der in Fig. 3b gezeigten Anordnung vermessene Positions- bzw. Bahnkurve des Tasters;
- Fig. 5: ein Ablaufschema des erfindungsgemäßen Verfahrens einschließlich der Bestimmung von geometrischen Kenngrößen des vermessenen dreidimensionalen Objekts;
- Fig. 6a-6b: jeweils eine Messdatenkurve zur Veranschaulichung eines Auswerteschrittes des erfindungsgemäßen Verfahrens;
- Fig. 7a-7h: jeweils einen Schnitt durch ein dreidimensionales Objekt mit einer erfindungsgemäß zu vermessenden Innengeometrie;
- Fig. 8a-8h: jeweils einen Schnitt durch ein dreidimensionales Objekt mit einer erfindungsgemäß zu vermessenden Außengeometrie;
- Fig. 9a-9d: jeweils einen Schnitt durch ein weiteres Anwendungsbeispiel eines erfindungsgemäß zu vermessenden dreidimensionalen Objekts; und
- Fig. 10a-10c: jeweils eine Ansicht einer Gewindestellmutter als zu vermessendes Objekt.

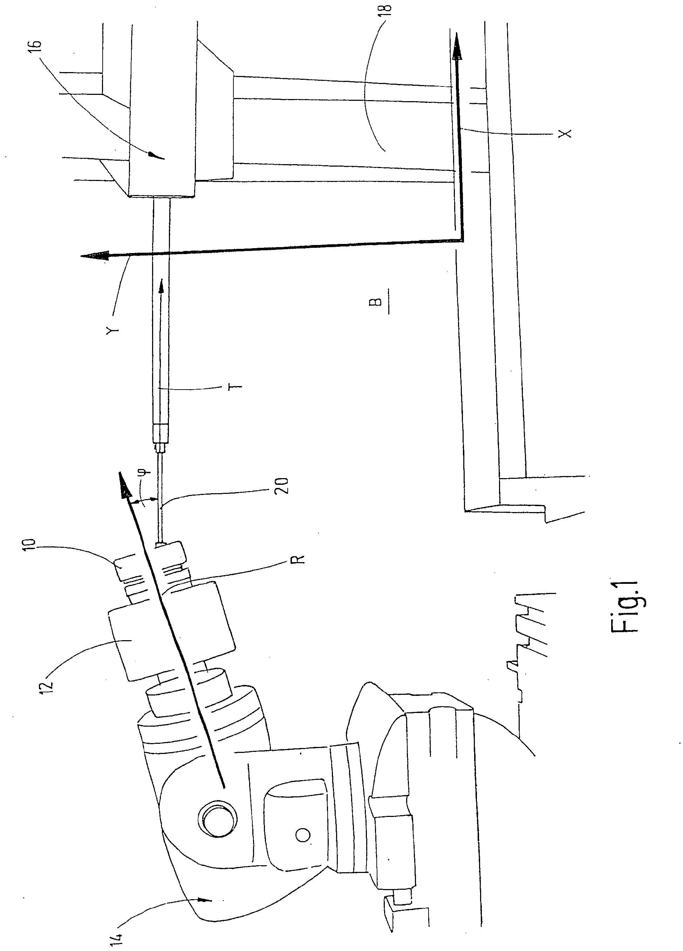

Fig. 1 zeigt in Seitenansicht eine Vorrichtung zur Vermessung eines dreidimensionalen Objekts 10, welches auf einem spindelartigen Halter 12 einer Aufspannvorrichtung 14 ortsfest angeordnet, anders ausgedrückt fixiert, ist. Der Aufspannvorrichtung 14 mit dem auf dem Halter 12 befestigten Objekt 10 gegenüberliegend, in der Fig. 1 rechts gezeichnet, ist eine Konturmessvorrichtung 16 mit einem in X-Richtung verfahrbar geführten Schlitten 18 und einem an diesem angeordneten, zusätzlich in vertikal zur X-Richtung verlaufender Y-Richtung verschiebbar angeordneter Taster 20. Der Taster 20 ist in einer von X-Achse und Y-Achse aufgespannten Bewegungsebene B verschiebbar angeordnet und liegt am zu vermessenden dreidimensionalen Objekt 10 an.

Aus Fig. 1 ist gut erkennbar, dass eine Drehachse R des Halters 12 für das Objekt 10 in der von X-Achse und Y-Achse aufgespannten Bewegungsebene B angeordnet ist und mit der X-Achse einen spitzen Winkel ϕ einschließt. Zur Messung wird der Halter 12 mit dem daran befestigten Objekt 10 um die Drehachse R rotiert und gleichzeitig der Taster 20 entlang einer parallel zur X-Achse verlaufenden Translationsachse T bewegt. Mittels der Konturmessvorrichtung 16 wird die Position des Tasters 20 in der Bewegungsebene B zeitabhängig erfasst und aus der gemessenen Bahnkurve b (X, Y) wird mit einer in Fig. 1 nicht gezeigten Auswerteeinheit unter Berücksichtigung der Drehbewegung des Halters 12 und der Translationsbewegung des Tasters 20 die gewünschte geometrische Kenngröße, wie die Profilform, des vermessenen Objekts 10, bestimmt.

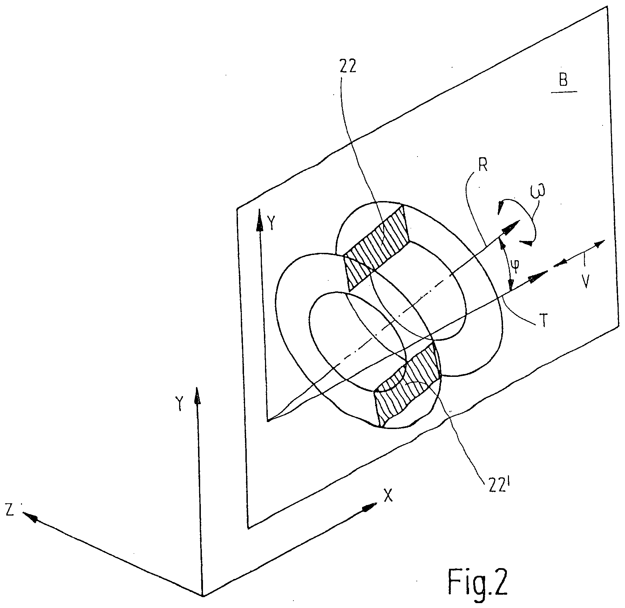

Fig. 2 verdeutlicht, dass die erfindungsgemäße Anordnung der Drehachse R und der Translationsachse T in der von der X-Achse und der Y-Achse eines kartesischen Koordinatensystems X, Y, Z aufgespannten Bewegungsebene B einer Projektion in die Ebene entsprechend Z = 0 entspricht. Durch die Rotation des zu vermessenden, in Fig. 2 nicht gezeigten Objekts 10 um die Drehachse R mit der Winkelgeschwindigkeit ω wird eine am Objekt zu vermessene Fläche 22, 22' durch die Bewegungsebene B geführt und dort vermessen. Die Rotationsbewegung des Objekts ist mit Kreislinien angedeutet. In Fig. 2 ist anschaulich dargestellt, dass durch eine Translationsbewegung mit der Geschwindigkeit v entlang der Translationsachse T und eine Rotationsbewegung um die Rotations- bzw. Drehachse R, welche beide in der Bewegungsebene B liegen, die komplette dreidimensionale Information messtechnisch erfasst wird.

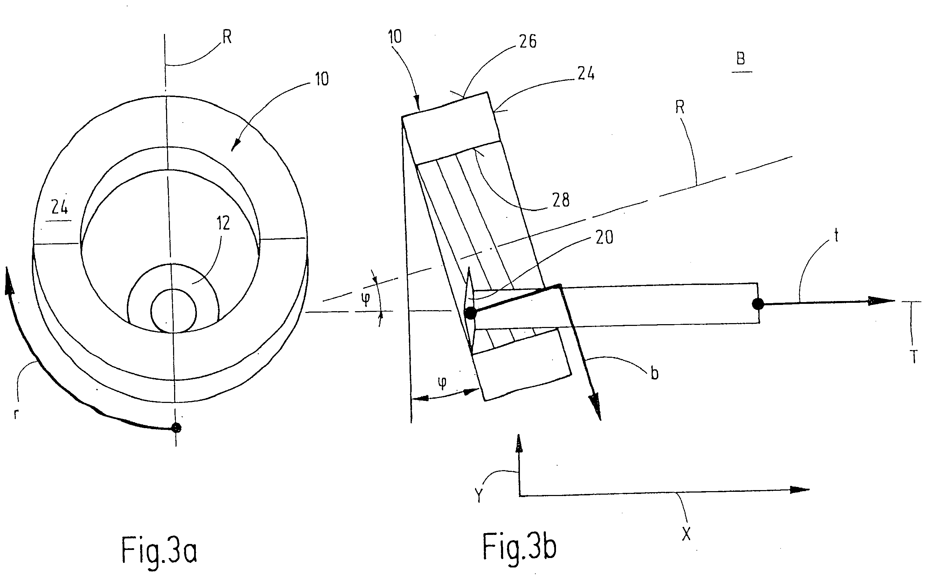

Das in Fig. 3a perspektivisch dargestellte dreidimensionale Objekt 10 ist als rotationssymmetrisches Drehteil mit Drehachse R ausgestaltet und weist eine kreisförmige Planfläche 24 auf. Die Rotationsbewegung r des Objekts 10 gemeinsam mit dem dieses ortsfest haltenden Halter 12 ist mit einem Pfeil verdeutlicht. In Fig. 3b ist in einem Schnitt durch das Objekt 10 eine Außenfläche 26 und eine Innenfläche 28, welche ein Innengewinde aufweist, sowie die im Wesentlichen senkrecht zur Drehachse R verlaufende Planfläche 24 gezeigt. Bei einer vorgegebenen Translationsbewegung t des am Objekt 10 anliegenden Tasters 20 entlang der Translationsachse T vollführt der Taster 20 eine mit Pfeil b veranschaulichte Abtastbewegung in der Bewegungsebene B und es wird eine Positions- bzw. Bahnkurve b (X, Y) des Tasters 20 im Koordinatensystem X, Y aufgezeichnet.

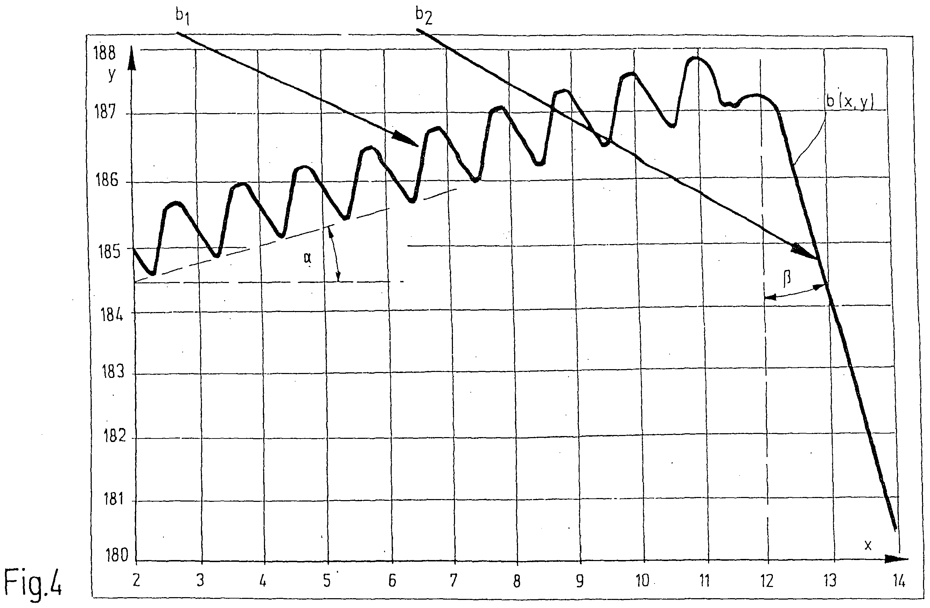

Die aufgezeichnete Bahnkurve b (X, Y) ist in Fig. 4 gezeigt. In einem ersten ansteigenden Abschnitt b₁ der Bahnkurve b (X, Y) ist die abgetastete Kontur des an der Innenfläche 28 abgetasteten Innengewindes erkennbar. Im zweiten Abschnitt b₂ fällt die Bahnkurve b (X, Y) ab und weist entsprechend der ebenen Ausbildung der Planfläche 24 keinen periodischen, sondern einen geraden Verlauf auf. Der erste Abschnitt b₁ und der zweite Abschnitt b₂ schließen mit den Koordinatenachsen X, Y jeweils einen Winkel α, β ein. Bei einer gewünschten Ausgestaltung des vermessenen Objekts 10 fallen die Drehachse R und die Rotations- bzw. Bezugsachse des rotationssymmetrischen Objekts 10 zusammen, so dass der erste Winkel α mit dem Neigungswinkel ϕ zusammenfällt. Bei einer gewünschten senkrechten Ausrichtung der Planfläche 24 zur Rotationsachse R des an der Innenfläche 28 vorgesehenen Innengewindes entspricht der zweite Winkel β ebenfalls dem Neigungswinkel ϕ. Im gezeigten Beispiel beträgt der Neigungswinkel ϕ = 15°.

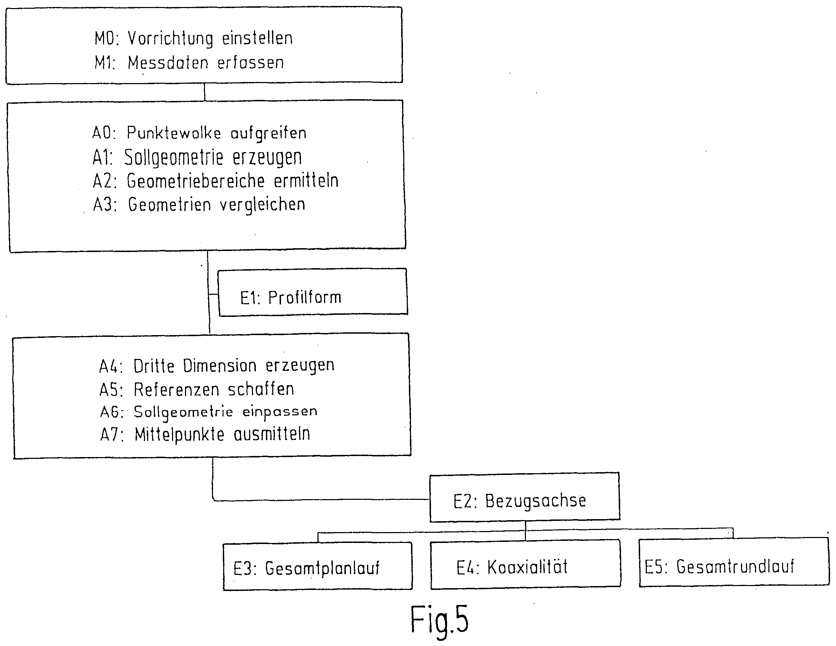

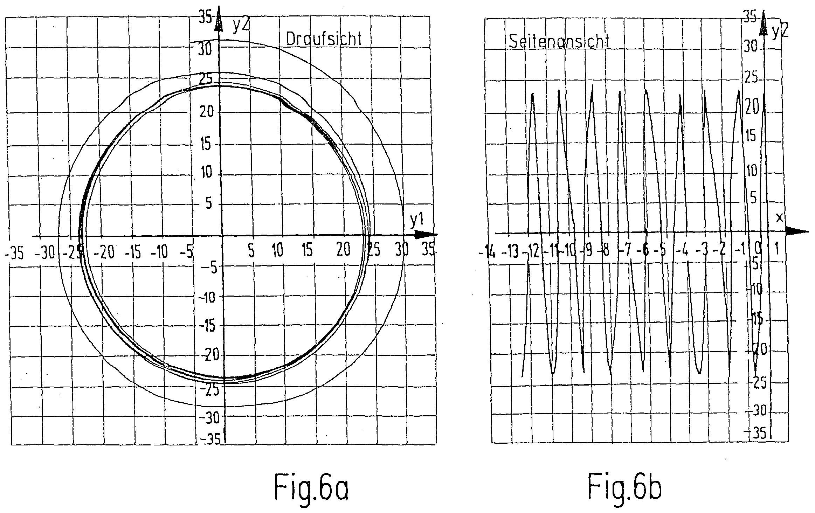

Dem in Fig. 5 gezeigten Ablaufschema sind nach den Messschritten M0 und M1 die Auswerteschritte A0 bis A7 entnehmbar, mittels deren geometrische Kenngrößen E1 bis E5 des vermessenen Objekts 10 ermittelt werden können. In den Fig. 6a und 6b ist der Auswerteschritt A4 zur Erzeugung einer dritten Dimension veranschaulicht. In Fig. 6a ist in Draufsicht die vom Taster 20 auf der Planfläche 24 abgefahrene spiralförmige Kurve gezeigt. Entsprechend der in Fig. 6b gezeigten Seitenansicht ergibt sich durch die Translationsbewegung t des Tasters 20 in X-Richtung ein schwingungsförmiger Bahnverlauf. Mit dem Verhältnis der Geschwindigkeit v der Translationsbewegung t zur Rotationsgeschwindigkeit ω der Rotationsbewegung r kann die gemessene Y-Koordinate in zwei Achsrichtungen verlegt werden und somit von der in der Bewegungsachse B = (X, Y, Z = 0) erfassten 2D-Information auf eine 3D-Information des gesamten Objekts 10 rückgerechnet werden.

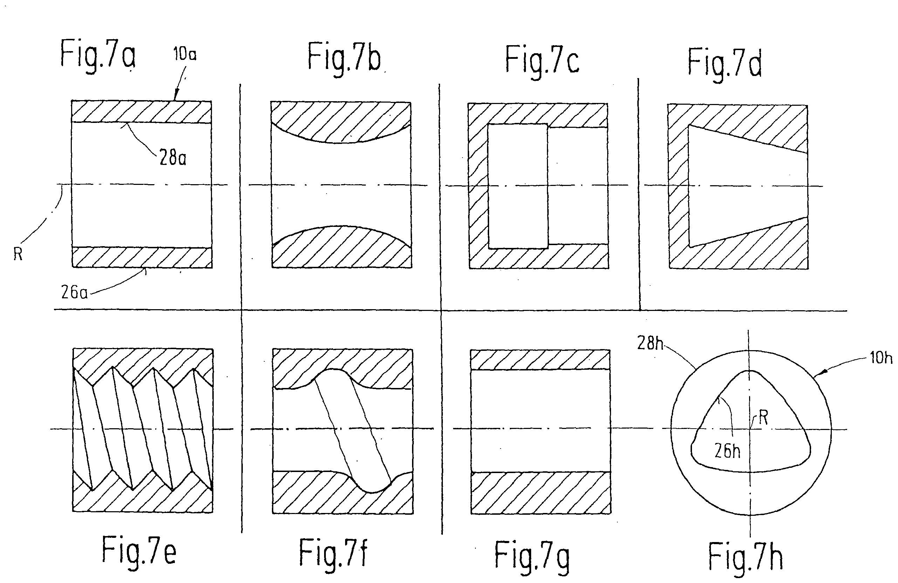

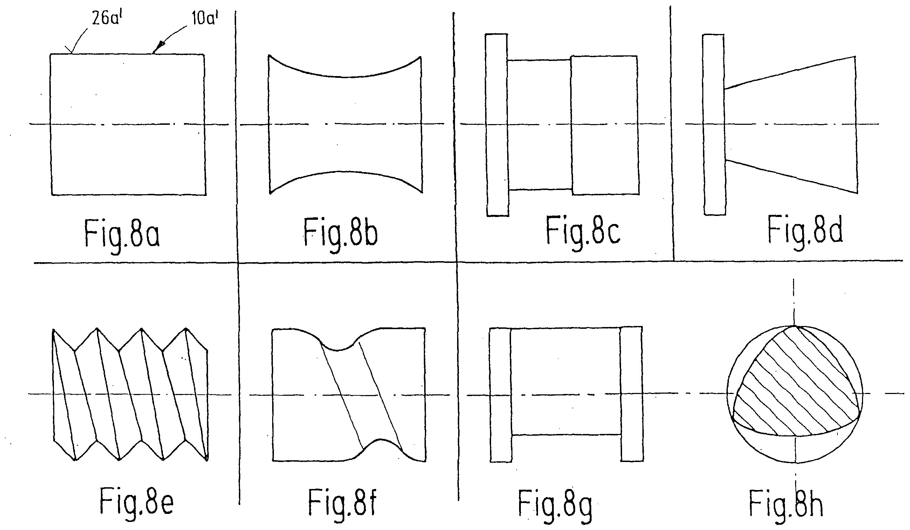

In den Fig. 7a bis 7g sind jeweils ein um eine Drehachse R rotationssymmetrisches Objekt 10a mit einer planen Außenfläche 26a und einer individuell ausgestalteten Innenfläche 28a dargestellt (nur in Fig. 7a bezeichnet). Die jeweilige Innenfläche 28a kann abschnittsweise plan, konkav, konvex, konisch, verjüngend, stufenförmig, mit einem Gewinde versehen, einem bogenförmigen Verlauf folgend ausgebildet sein. Bei dem in Fig. 7h gezeigten Objekt 10h ist die Außenfläche 28h rotationssymmetrisch und die Innenfläche 26h mit unterschiedlichen Abständen zur Drehachse R ausgebildet. Die jeweiligen Gegenstücke zu den in Fig. 7a-7h gezeigten besonderen Innengeometrien sind in den Fig. 8a-8h gezeigt, anders ausgedrückt bilden das in Fig. 7a gezeigte Objekt 10a und das in Fig. 8a gezeigte Objekt 10a' mit der Außenfläche 26a' in der Zusammenschau einen Vollzylinder, entsprechend Fig. 7b und 8b, usw.

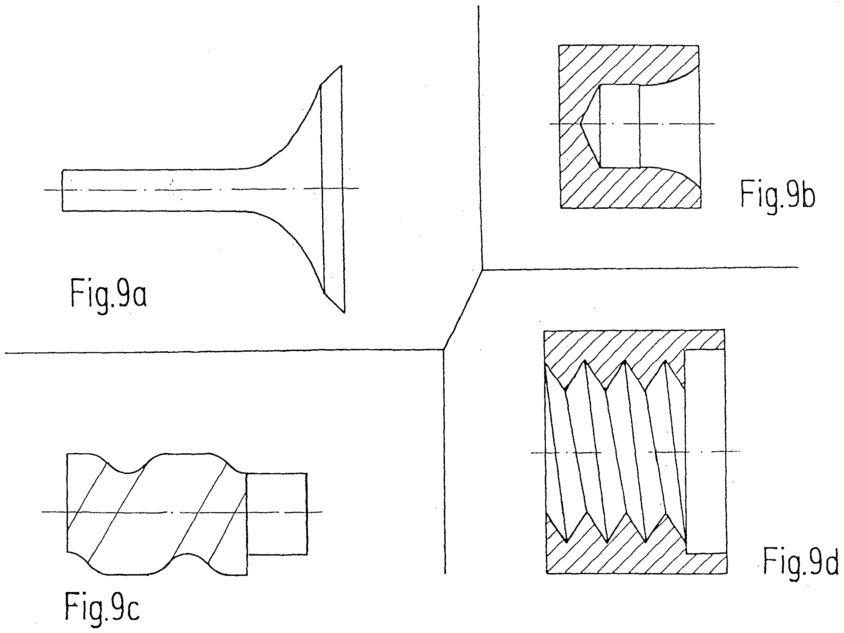

Den Fig. 9a-9d sind weitere Anwendungsbeispiele mit unterschiedlich ausgestalteten Außen- und Innengeometrien von rotationssymmetrischen Objekten gezeigt.

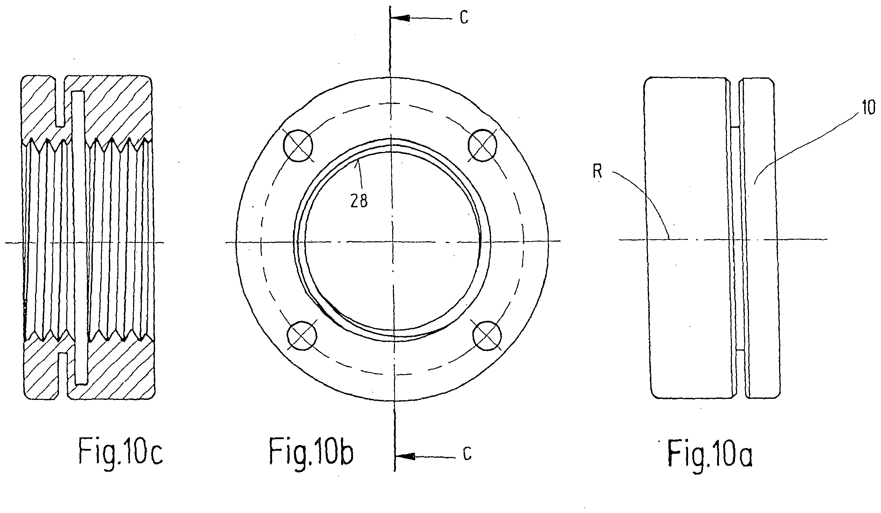

Die Fig. 10a-10c veranschaulichen, dass mittels des erfindungsgemäßen Verfahrens eine in Fig. 10a in Seitenansicht, in Fig. 10b in Draufsicht und in Fig. 10c in einem Schnitt gezeigte Gewindestellmutter vermessen werden kann. Die Gewindestellmutter ist rotationssymmetrisch zur Drehachse R ausgebildet und weist an ihrer Innenfläche 28 ein Innengewinde auf sowie entlang ihrer Erstreckung entlang der Drehachse R eine zweitstufige Unterbrechung auf, wodurch eine Spielfreiheit bei Verwendung der gezeigten Gewindestellmutter erreicht wird.

## Patentansprüche

1. Verfahren zur Vermessung eines dreidimensionalen Objekts (10, 10a, 10a', 10h), umfassend:
- die ortsfeste Fixierung des Objekts (10, 10a, 10a', 10h) an einem um eine Drehachse (R) rotierbaren Halter (12),
- die Abtastung mindestens einer Fläche (22, 22', 24, 26, 26a', 28, 28a) des Objekts (10, 10a, 10a', 10h) mittels eines Tasters (20), wobei das Objekt (10, 10a, 10a', 10h) um die Drehachse (R) des Halters (12) rotiert wird und der Halter (12) und der Taster (20) relativ zueinander bewegt werden, und
- die Erfassung der Position (b (X, Y)) des Tasters (20), um geometrische Kenngrößen (E1-E5) des Objekts (10, 10a, 10'a, 10h) zu bestimmen,
- wobei der Halter (12) und der Taster (20) linear entlang einer Translationsachse (T) zueinander bewegt werden, die mit der Drehachse (R) des Halters (12) einen spitzen Winkel (0° < ϕ < 90°) einschließt und eine Ebene aufspannt, innerhalb der der Taster (20) bewegbar ist,
- **dadurch gekennzeichnet, dass** mittels des Tasters (20) eine quer zur Drehachse (R) des Halters (12) angeordnete Planfläche (24) des Objekts (10) abgetastet wird; und
- dass dann aus einer Verrechnung der Geometrie des Objekts (10) zunächst die Lage einer Bezugsachse des Objekts (10) bestimmt wird und anschließend eine Planflächenkontur zum Planlauf des Objekts (10) bezogen auf die Bezugsachse des Objekts berechnet wird.

2. Verfahren nach Anspruch 1, **dadurch gekennzeichnet, dass** die Erfassung der Position (b (X, Y)) des Tasters (20) in einem Koordinatensystem (X, Y) erfolgt und die Translationsachse (T) parallel zu einer Koordinatenachse (X) des Koordinatensystems (X, Y) verläuft.

3. Verfahren nach einem der vorhergehenden Ansprüche, **dadurch gekennzeichnet, dass** der Winkel (ϕ) zwischen der Translationsachse (T) und der Drehachse (R) gleich 15° beträgt.

4. Verfahren nach einem der vorhergehenden Ansprüche, **dadurch gekennzeichnet, dass** mittels des Tasters (20) eine insbesondere parallel zur Drehachse (R) verlaufende Innenfläche (28, 28a, 28h) oder eine Außenfläche (26, 26a', 26h) des Objekts (10, 10a, 10a', 10h) abgetastet wird.

5. Verfahren nach Anspruch 4, **dadurch gekennzeichnet, dass** an der Innenfläche (28, 28a, 28h) oder der Außenfläche (26, 26a',26h) ein Gewinde abgetastet wird.

6. Verfahren nach einem der vorhergehenden Ansprüche, **dadurch gekennzeichnet, dass** das Objekt (10, 10a, 10a', 10h) eine zur Drehachse (R) rotationssymmetrische Form, insbesondere eine Zylinderform, aufweist.

7. Verfahren nach einem der vorhergehenden Ansprüche, **dadurch gekennzeichnet, dass** das Objekt (10, 10a, 10a', 10h) ein Maschinen-element, wie eine Stellmutter oder ein Gewindering, und bevorzugt als Drehteil gefertigt ist.

8. Verfahren nach einem der vorhergehenden Ansprüche, **dadurch gekennzeichnet, dass** aus den während einer bestimmten Rotationsbewegung (r) des Halters (12) und einer bestimmten Translationsbewegung (t) zwischen Halter (12) und Taster (20) erfassten Positionen (b (X, Y)) des Tasters (20) geometrische Kenngrößen (E1-E5) des Objekts (10, 10a, 10'a, 10h), wie Profilform, Bezugsachsen, Gesamtplanlauf, Koaxialität und Gesamtrundlauf, bestimmt werden.

## Claims

1. A method for measuring a three-dimensional object (10, 10a, 10a', 10h), comprising:
- the stationary fixation of the object (10, 10a, 10a', 10h) to a holder (12), which can be rotated about an axis of rotation (R),
- the scanning at least of one surface (22, 22', 24, 26, 26a', 28, 28a) of the object (10, 10a, 10a', 10h) by means of a scanner (20), wherein the object (10, 10a, 10a', 10h) is rotated about the axis of rotation (R) of the holder (12), and the holder (12) and the scanner (20) are moved relative to one another, and
- the detection of the position (b(X, Y)) of the scanner (20) in order to determine geometric parameters (E1-E5) of the object (10, 10a, 10a', 10h),
- wherein the holder (12) and the scanner (20) are moved linearly with respect to one another along a translation axis (T), which forms an acute angle (0° < ϕ <90°) with the axis of rotation (R) of the holder (12) and defines a plane, within which the scanner (20) can be moved,
- **characterised in that** an end face (24) of the object (10) arranged transversely to the axis of rotation (R) of the holder (12) is scanned by means of the scanner (20); and
- that firstly the position of a reference axis of the object (10) is determined by offsetting the geometry of the object (10) and then an end contour to the axial run-out of the object (10) is calculated with reference to the reference axis of the object.

2. The method according to claim 1, **characterised in that** the position (b(X, Y)) of the scanner (20) is detected in a coordinate system (X, Y) and the translation axis (T) runs parallel to a coordinate axis (X) of the coordinate system (X, Y).

3. The method according to one of the preceding claims, **characterised in that** the angle (ϕ) between the translation axis (T) and the axis of rotation (R) is equal to 15°.

4. The method according to one of the preceding claims, **characterised in that** an inner surface (28, 28a, 28h) or an outer surface (26, 26a', 26h) of the object (10, 10a, 10a', 10h), in particular running parallel to the axis of rotation (R), is scanned by means of the scanner (20).

5. The method according to claim 4, **characterised in that** a thread is scanned on the inner surface (28, 28a, 28h) or the outer surface (26, 26a', 26h).

6. The method according to one of the preceding claims, **characterised in that** the object (10, 10a, 10a', 10h) has a shape that is rotationally symmetrical to the axis of rotation (R), in particular a cylindrical shape.

7. The method according to one of the preceding claims, **characterised in that** the object (10, 10a, 10a', 10h) is a machine element, such as a lock nut or a ring nut, and is preferably manufactured as a turned part.

8. The method according to one of the preceding claims, **characterised in that** geometric parameters (E1-E5) of the object (10, 10a, 10a', 10h), such as profile shape, reference axes, total axial run-out, concentricity and total radial run-out, are determined from the positions (b(X, Y)) of the scanner (20) detected during a specific rotational movement (r) of the holder (12) and a specific translational movement (t) between holder (12) and scanner (20).

## Revendications

1. Procédé de mesure d'un objet (10, 10a, 10a', 10h) en trois dimensions, comprenant :
- l'immobilisation à poste fixe de l'objet (10, 10a, 10a', 10h) sur un support (12) tournant autour d'un axe (R) de rotation,
- le balayage d'au moins une surface (22, 22', 24, 26, 26a', 28, 28a) de l'objet (10, 10a, 10a', 10h) au moyen d'un palpeur (20), dans lequel on fait tourner l'objet (10, 10a, 10a', 10h) autour de l'axe (R) de rotation du support (12) et on déplace le support (12) et le palpeur (20) l'un par rapport à l'autre, et
- la détection de la position (b(X, Y)) du palpeur (20), pour déterminer des grandeurs (E1 à E5) géométriques de l'objet (10, 10a, 10'a, 10h),
- dans lequel on déplace le support (12) et le palpeur (20) l'un par rapport à l'autre linéairement le long d'un axe (T) de translation, qui fait, avec l'axe (R) de rotation du support (12), un angle aigu (0°°< ϕ < 90°), qui s'étend dans un plan dans lequel le palpeur (20) peut se déplacer,
- **caractérisé en ce qu'**au moyen du palpeur (20), on balaye une surface (24) plane de l'objet (10) disposée transversalement à l'axe (R) de rotation du support (12) et
- **en ce qu'**ensuite, à partir d'un calcul de la géométrie de l'objet (10), on détermine d'abord la position d'un axe de référence de l'objet (10) et on calcule ensuite un contour de surface plane pour la planéité de l'objet (10) rapportée à l'axe de référence de l'objet.

2. Procédé suivant la revendication 1, **caractérisé en ce que** la détection de la position (b(X, Y)) du palpeur (20) s'effectue dans un système de coordonnées (X, Y) et l'axe (T) de translation s'étend parallèlement à un axe (X) de coordonnées du système de coordonnées (X, Y).

3. Procédé suivant l'une des revendications précédentes, **caractérisé en ce que** l'angle (ϕ), entre l'axe (T) de translation et l'axe (R) de rotation, est égal à 15°.

4. Procédé suivant l'une des revendications précédentes, **caractérisé en ce qu'**au moyen du palpeur (20), on balaye une surface (28, 28a, 28h) intérieure, s'étendant notamment parallèlement à l'axe (R) de rotation, ou une surface (26, 26a', 26h) extérieure de l'objet (10, 10a, 10a'; 10h).

5. Procédé suivant la revendication 4, **caractérisé en ce que**, sur la surface (28, 28a, 28h) intérieure ou sur la surface (26, 26a', 26h) extérieure, on balaie un filetage.

6. Procédé suivant l'une des revendications précédentes, **caractérisé en ce que** l'objet (10, 10a, 10a', 10h) a une forme de révolution par rapport à l'axe (R) de rotation, notamment une forme cylindrique.

7. Procédé suivant l'une des revendications précédentes, **caractérisé en ce que** l'objet (10, 10a, 10a', 10h) est fabriqué sous la forme d'un élément de machine, comme un écrou de pose ou une bague filetée, et de préférence sous la forme d'une pièce tournante.

8. Procédé suivant l'une des revendications précédentes, **caractérisé en ce qu'**à partir des positions (b(X, Y)) du palpeur (20) détectées pendant un mouvement (r) de rotation déterminé du support (12) et un mouvement (t) de translation déterminé entre le support (12) et le palpeur (20), on détermine des grandeurs (E1 à E5) géométriques de l'objet (10, 10a, 10'a, 10h), comme des formes de profil, des axes de référence, des planéités complètes, des co-axialités et des rotondités complètes.
